# EUROPEAN PATENT APPLICATION

(11) **EP 2 549 593 A2**
(43) Date of publication of application: **23.01.2013**
(21) Application number: 12169506.8
(22) Date of filing: 25.05.2012
(51) Int. Cl.: H01R 4/34, H01R 11/12, F16B 43/00

(54) **Screw terminal block, electric motor controller, and electrical device**

(30) Priority: 20.07.2011 JP 2011159167
(71) Applicant: Kabushiki Kaisha Yaskawa Denki, Kitakyushu-shi, Fukuoka 806-0004 (JP)
(72) Inventor: Sasahara, Kenta, Kitakyushu-shi, Fukuoka 806-0004 (JP); Nakaya, Makoto, Kitakyushu-shi, Fukuoka 806-0004 (JP); Tohyama, Tomoyo, Kitakyushu-shi, Fukuoka 806-0004 (JP); Nagatomo, Shigekatsu, Kitakyushu-shi, Fukuoka 806-0004 (JP)
(74) Representative: Viering, Jentschura & Partner

(57) **Abstract**

Provided is a screw terminal block capable of connecting an electrical wire of a smaller size, an electric motor controller, and an electrical device.

An electric motor controller (10) with a screw terminal block (12) including: a terminal fitting (38) connected with a solderless terminal (T) having a crimping portion (22) crimped to wire cores (Cs) of an electrical wire (C); a plate-shaped square washer (40) having a cut-out portion (60) in at least one edge thereof, the cut-out portion (60) for avoiding interference with the crimping portion (22) of the solderless terminal (T) or the wire cores (Cs) projecting from the crimping portion (22) to an end of the electrical wire (C); and a terminal screw (42) fixing the solderless terminal (T) between the square washer (40) and the terminal fitting (38).

## Description

### BACKGROUND OF THE INVENTION

### Field of the Invention

The present invention relates to a screw terminal block, an electric motor controller, and an electrical device.

### Description of the Related Art

Japanese Examined Patent Application Publication No. H07-44045 describes a terminal device for an electrical device. The terminal device includes a terminal screw and a wire holding plate attached to a neck portion of the terminal screw. Each of four sides of the wire holding plate includes a cut-out in a substantially central portion thereof. The terminal device includes guiding ribs respectively corresponding to the cut-outs.
An object of the disclosure is to provide a screw terminal block capable of connecting an electrical wire of a smaller size, an electric motor controller, and an electrical device.

### SUMMARY OF THE INVENTION

An electric motor controller according to a first aspect of the disclosure in accordance with the above object comprises a screw terminal block including: a terminal fitting connected with a solderless terminal having a crimping portion crimped to wire cores of an electrical wire; a plate-shaped square washer having a cut-out portion in at least one edge thereof, the cut-out portion for avoiding interference with the crimping portion of the solderless terminal or the wire cores projecting from the crimping portion to an end of the electrical wire; and a terminal screw fixing the solderless terminal between the square washer and the terminal fitting.

A screw terminal block according to a second aspect of the disclosure in accordance with the above object comprises a terminal fitting connected with a solderless terminal having a crimping portion crimped to wire cores of an electrical wire; a plate-shaped square washer having a cut-out portion in at least one edge thereof, the cut-out portion for avoiding interference with the crimping portion of the solderless terminal or the wire cores projecting from the crimping portion to an end of the electrical wire; and a terminal screw fixing the solderless terminal between the square washer and the terminal fitting.

An electrical device according to a third aspect of the disclosure in accordance with the above object includes a screw terminal block including: a terminal fitting connected with a solderless terminal having a crimping portion crimped to wire cores of an electrical wire; a plate-shaped square washer having a cut-out portion in at least one edge thereof, the cut-out portion for avoiding interference with the crimping portion of the solderless terminal or the wire cores projecting from the crimping portion to an end of the electrical wire; and a terminal screw fixing the solderless terminal between the square washer and the terminal fitting.

### EFFECT OF THE INVENTION

According to the disclosure, it is possible to connect an electrical wire of a smaller size as compared to a case not employing the configuration of the disclosure.

### BRIEF DESCRIPTION OF THE DRAWINGS

Fig. 1 is an internal structural diagram of an inverter according to a first embodiment;
Fig. 2 is a perspective view of a screw terminal block provided for the inverter;
Fig. 3A is a plan view of the screw terminal block provided for the inverter;
Fig. 3B is a front elevational view of the screw terminal block provided for the inverter;
Fig. 3C is a side elevational view of the screw terminal block provided for the inverter;
Fig. 4 is a perspective view illustrating a cross-section taken along line A-A in Fig. 3A;
Fig. 5 is a perspective view of a terminal fitting continuing to a lead portion;
Fig. 6 is a perspective view of a square washer of the screw terminal block provided for the inverter;
Fig. 7A is a plan view of the square washer of the screw terminal block provided for the inverter;
Fig. 7B is a side elevational view of the square washer of the screw terminal block provided for the inverter;
Fig. 8 is a perspective view illustrating how the square washer of the screw terminal block provided for the inverter fixes a solderless terminal;
Fig. 9 is a plan view illustrating how the square washer of the screw terminal block provided for the inverter fixes the solderless terminal;
Fig. 10 is a plan view illustrating how the square washer of the screw terminal block provided for the inverter fixes wire cores of an electrical wire;
Fig. 11 is a plan view illustrating how a square washer of a screw terminal block provided for an inverter according to a second embodiment fixes a solderless terminal; and
Fig. 12 is a plan view illustrating how the square washer of the screw terminal block provided for the inverter fixes wire cores of an electrical wire.

### DESCRIPTION OF THE EMBODIMENTS

With reference to the appended drawings, embodiments are described for better understanding of the disclosure. In each of the drawings, some of components that do not related to the description may not be illustrated.

### First Embodiment

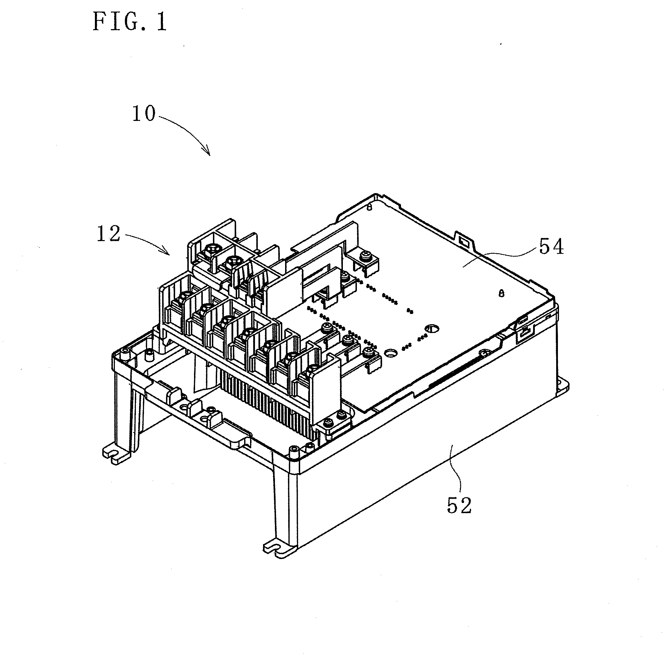

An inverter 10, one example of an electric motor controller or an electronic device, according to a first embodiment can control a motor (not illustrated). The inverter 10 employs dual rating allowing selection between normal duty rating and heavy duty rating. In other words, the inverter 10 is dual rated. Therefore, according to capacity of a motor to be driven, a plurality of electrical wires of different sizes can be connected to the inverter 10.
As illustrated in Fig. 1, the inverter 10 includes a multipolar screw terminal block 12 as an external terminal.

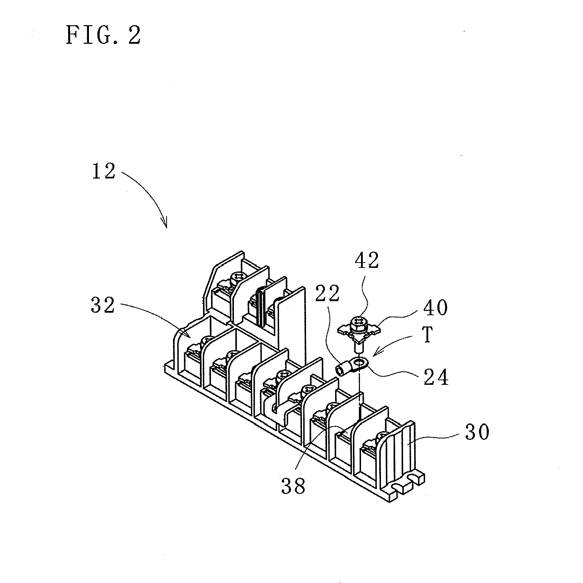

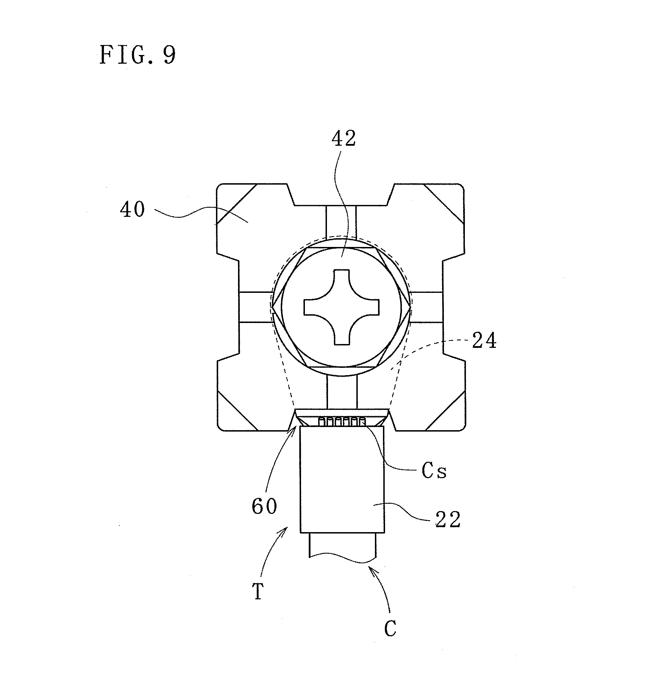

At an end of an electrical wire for power supply or for signal transmission connected to the inverter 10, a solderless terminal T (see Fig. 2 and Fig. 9) is provided. The solderless terminal T includes a crimping portion 22 crimped to wire cores Cs of an electrical wire C (see Fig. 9), and a connecting portion 24 connected to the screw terminal block 12 on an end of the crimping portion 22. The electrical wire C is crimped such that the wire cores Cs extend toward an end of the electrical wire C from the crimping portion 22 of the solderless terminal T by about 1 mm (see Fig. 9).
The electrical wire C is electrically connected to the inverter 10 by connecting the connecting portion 24 of the solderless terminal T to the screw terminal block 12. In some cases, the wire cores Cs of the electrical wire C are directly connected to the screw terminal block 12 instead of the solderless terminal T.

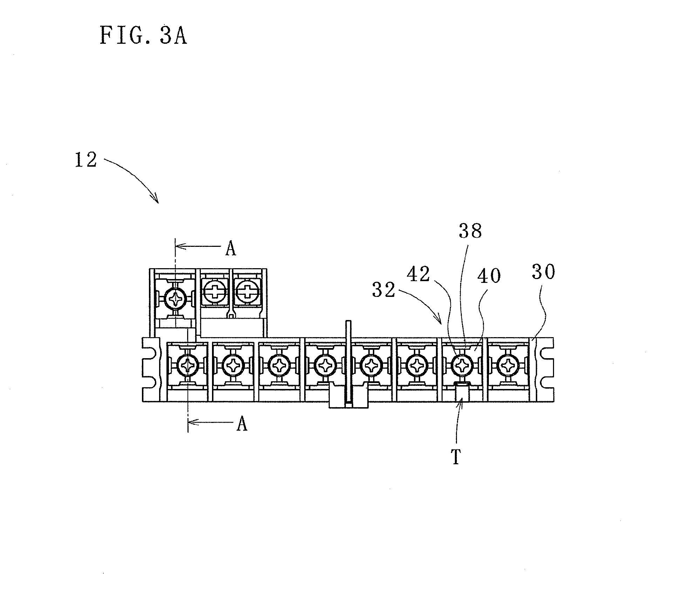

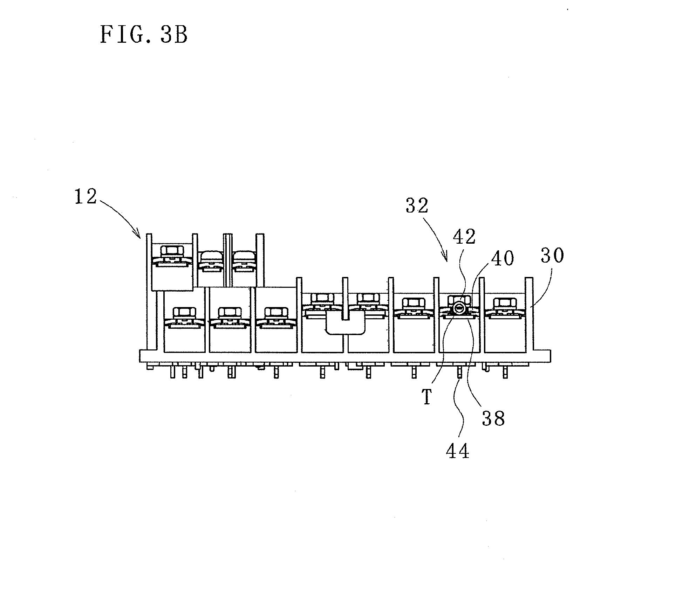

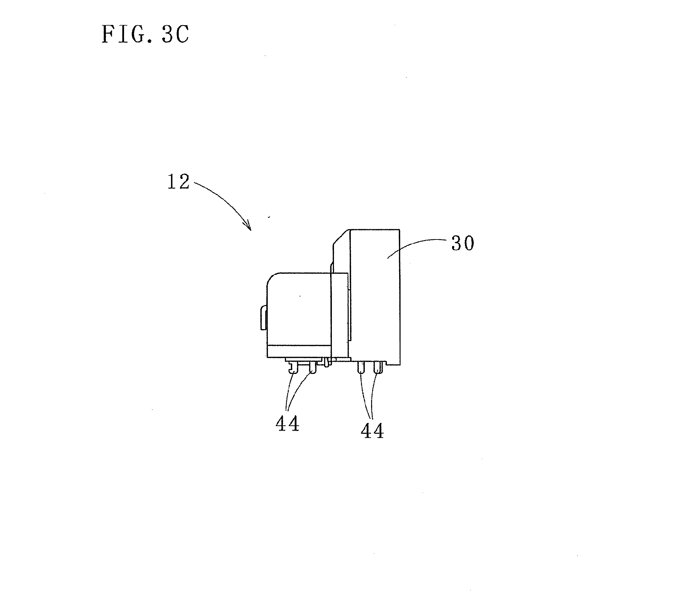

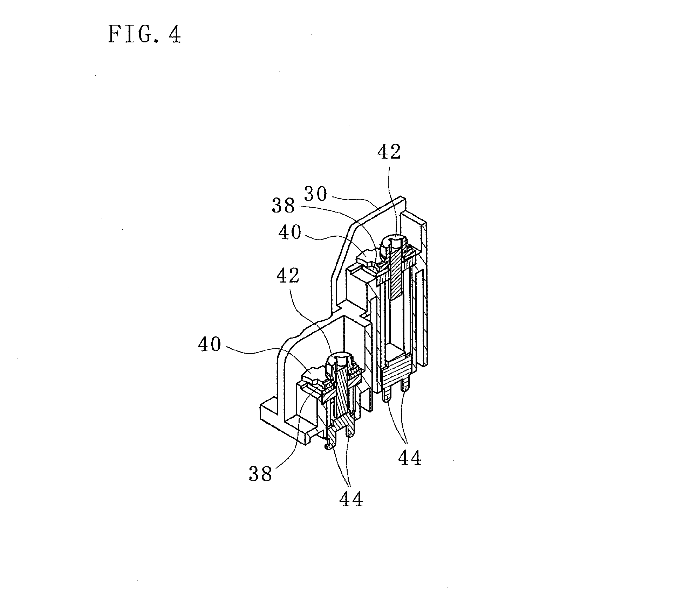

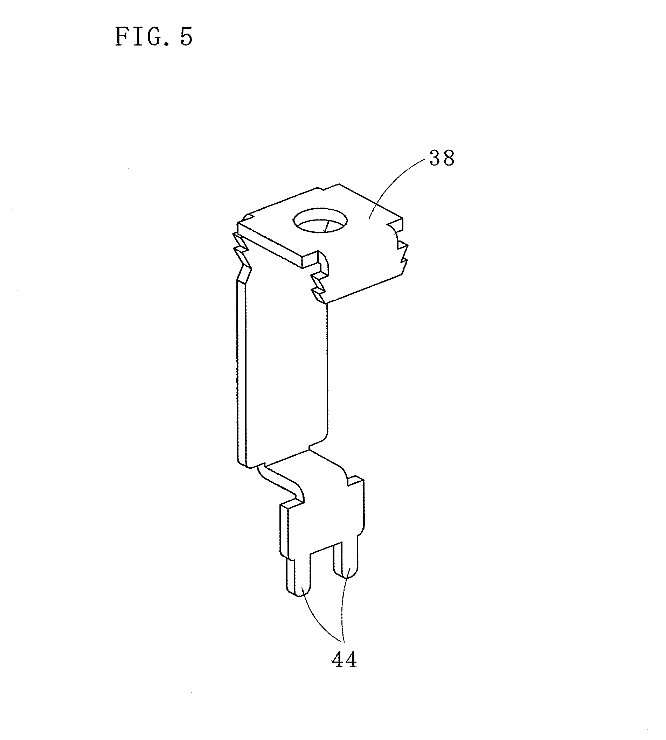

The screw terminal block 12 includes a plurality of terminal portions 32 in a housing 30 as illustrated in Fig. 2, Fig. 3A to Fig. 3C, and Fig. 4. Each of the terminal portions 32 includes a terminal fitting 38, a square washer (for a screw terminal block) 40, and a terminal screw 42.
The terminal fitting 38 is connected with the connecting portion 24 of the solderless terminal T at a tip end of the electrical wire C. The terminal fitting 38 is electrically connected to a lead portion 44 that projects from the screw terminal block 12 (see Fig. 5). The lead portion 44 is electrically connected to a substrate 54 fixed to a heatsink 52 illustrated in Fig. 1.
The square washer 40 is rectangular in planar view. The square washer 40 is in contact with either the connecting portion 24 of the solderless terminal T or the wire cores Cs of the electrical wire C.
The terminal screw 42 can hold (punch) and fix the connecting portion 24 of the solderless terminal T or the wire cores Cs of the electrical wire C between the square washer 40 and the terminal fitting 38. The terminal screw 42 can hold the square washer 40 at a neck portion of the terminal screw 42.

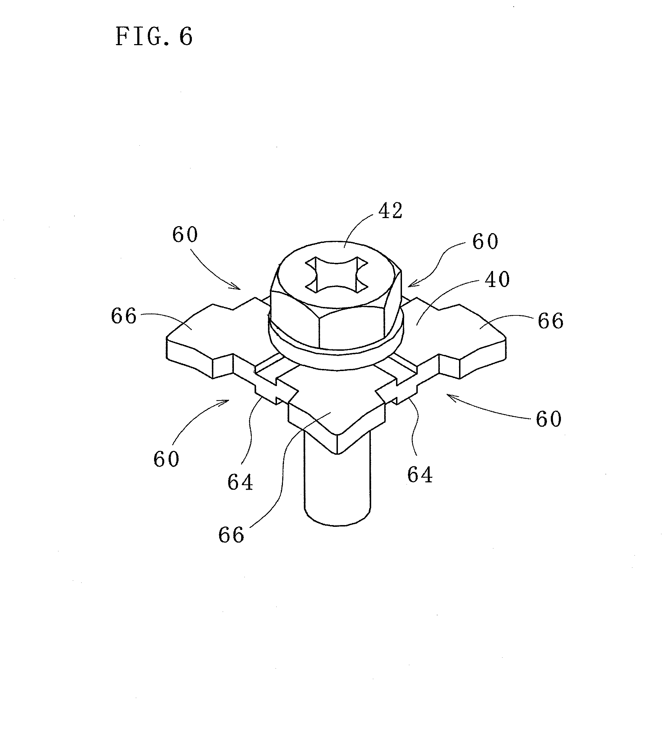

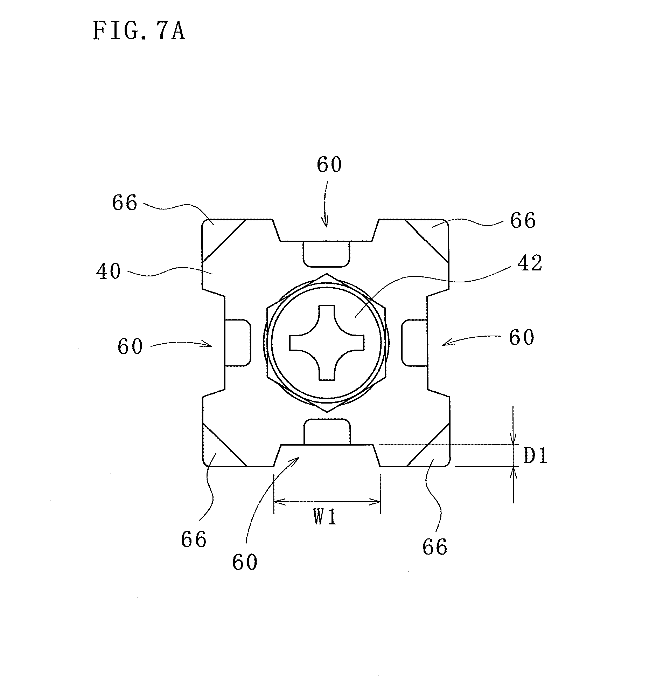

Now, the square washer 40 is described in detail.
As illustrated in Fig. 6, a cut-out portion 60 for avoiding interference with the crimping portion 22 of the solderless terminal T or the wire cores Cs crimped by the crimping portion 22 is provided in a central portion of each edge of the square washer 40. It is sufficient to provide the cut-out portion 60 in at least one edge.
As illustrated in Fig. 6 and Fig. 7A, the cut-out portion 60 is provided such that an opening width W1 along the edge, i.e., length in a first direction along the edge, is wider than a depth D1 of the cut-out portion 60, i.e., length in a second direction intersecting with the first direction. Also, a width of the cut-out portion 60 becomes narrower toward a side opposite to the opening, i.e., toward the terminal screw 42.
In other words, when viewed in an axial direction of the terminal screw 42 (in planar view), the cut-out portion 60 is a trapezoid with a side of the cut-out portion 60 along the edge as a lower base and a side facing the terminal screw 42 as an upper base.
Further, a center of the square washer 40 that is inward from the cut-out portion 60 includes a projecting portion 64 projecting toward the terminal fitting 38 (see Fig. 6).

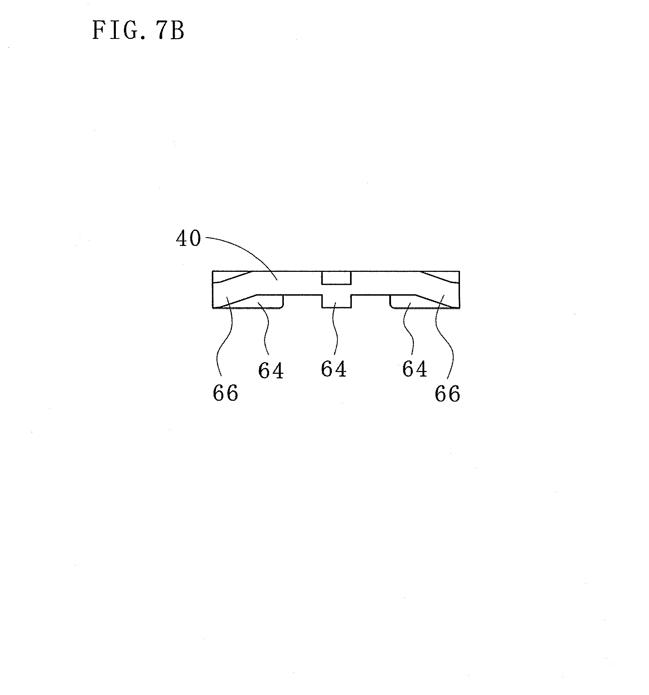

As illustrated in Fig. 6 and Fig. 7B, each corner of the square washer 40 includes a folded portion 66. The folded portion 66 is bent from centers of edges of the corner excluding the cut-out portions 60 toward the terminal fitting 38. A surface of the folded portion 66 facing toward the terminal fitting 38 (i.e., surface in contact with the connecting portion 24 of the solderless terminal T or the wire cores Cs of the electrical wire C) is, for example, a flat surface, but can be a curved surface that conforms with a surface of the wire cores Cs connected to the terminal portions 32. Specifically, the folded portions 66 can be any form as long as an area in contact with the wire cores Cs connected to the terminal portions 32 is increased compared to a square washer without the folded portions 66.

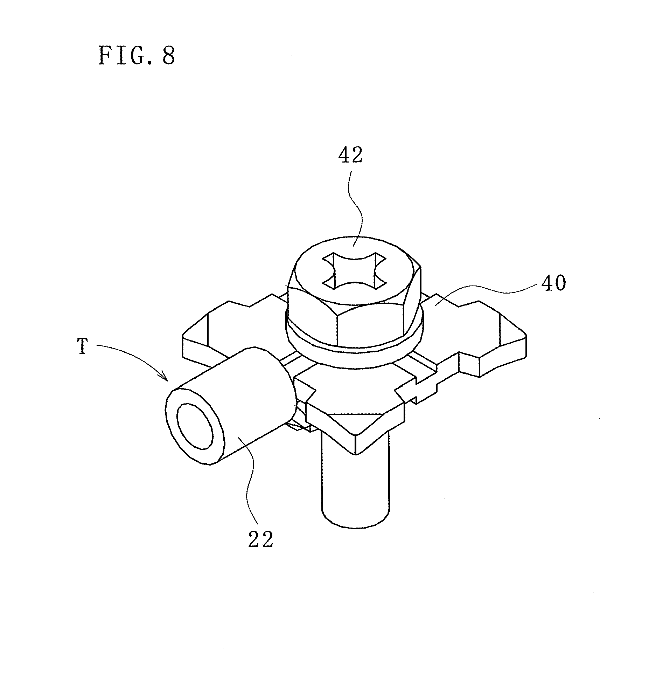

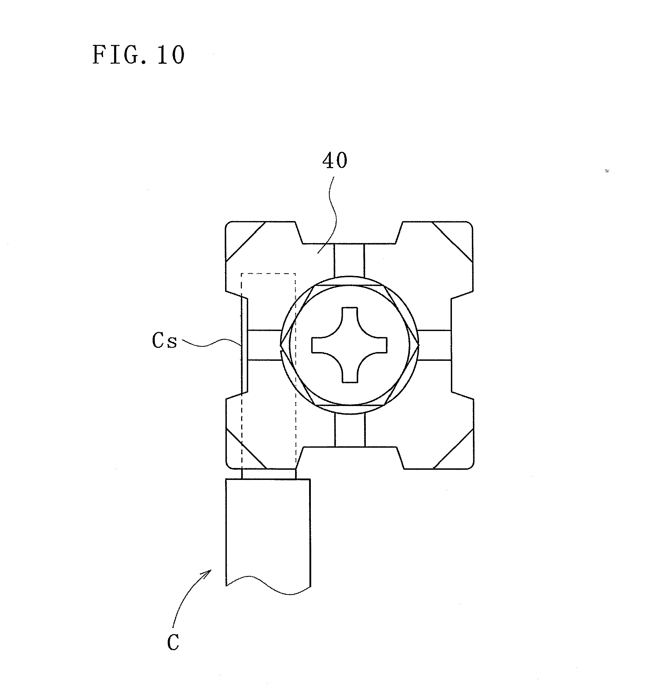

According to this embodiment, as illustrated in Fig. 8 and Fig. 9, the cut-out portion 60 for avoiding interference with the solderless terminal T or the wire cores Cs crimped by the solderless terminal T allows the solderless terminal T of a smaller size to be connected to the terminal portion 32. In short, the electrical wire C of a smaller size can be connected to the screw terminal block 12.
Since the width of the cut-out portion 60 becomes narrower toward the side opposite to the opening, the solderless terminal T can be easily fixed even if the square washer 40 is displaced around a central axis of the terminal screw 42 when the terminal screw 42 is fastened.
When the wire cores Cs of the electrical wire C is directly connected to the terminal portion 32 (see Fig. 10), the folded portions 66 at the corners of the square washer 40 can secure an area of contact between the wire cores Cs and the square washer 40, in other words, the folded portions 66 can secure force for holding a cable.

### Second Embodiment

An inverter according to a second embodiment is described. The same components as those of the inverter 10 according to the first embodiment are denoted by the same reference numerals, and detailed descriptions thereof are omitted.

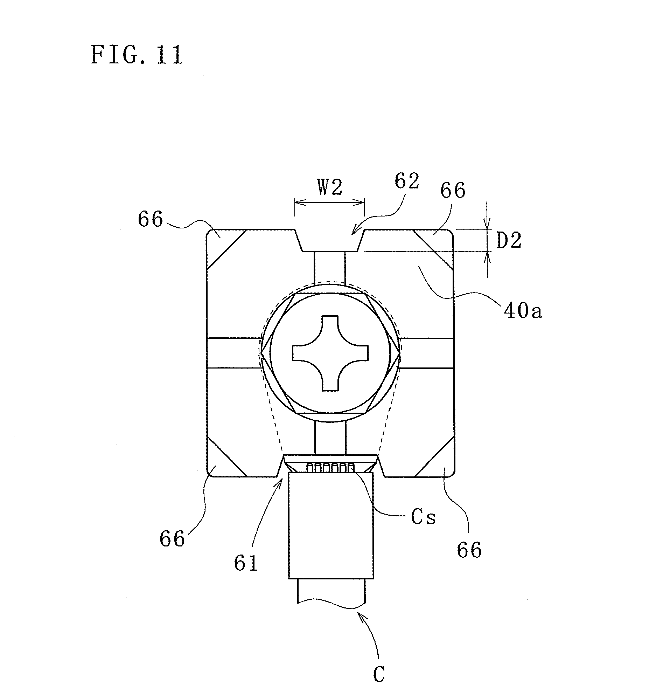

The inverter according to this embodiment includes a square washer 40a for a screw terminal block. As illustrated in Fig. 11, only one edge of the square washer 40a includes a first cut-out portion 61 for avoiding interference with a solderless terminal T or wire cores Cs crimped by the solderless terminal T.
Further, a second cut-out portion 62 for defining an opening direction of the first cut-out portion 61 is provided in an edge opposite of the first cut-out portion 61. A housing 30 of a screw terminal block 12 includes a projection that corresponds to the second cut-out portion 62 (not illustrated).
The second cut-out portion 62 is provided such that an opening width W2 along the edge (i.e., length in a direction along the edge) becomes wider than a depth D2 of the second cut-out portion 62 (i.e., length in a direction intersecting with the direction along the edge). Further, the opening width W2 of the second cut-out portion 62 becomes narrower toward a side opposite to the opening.
No cut-out portion is provided in the edge other than the edge having the first cut-out portion 61 or the second cut-out portion 62.

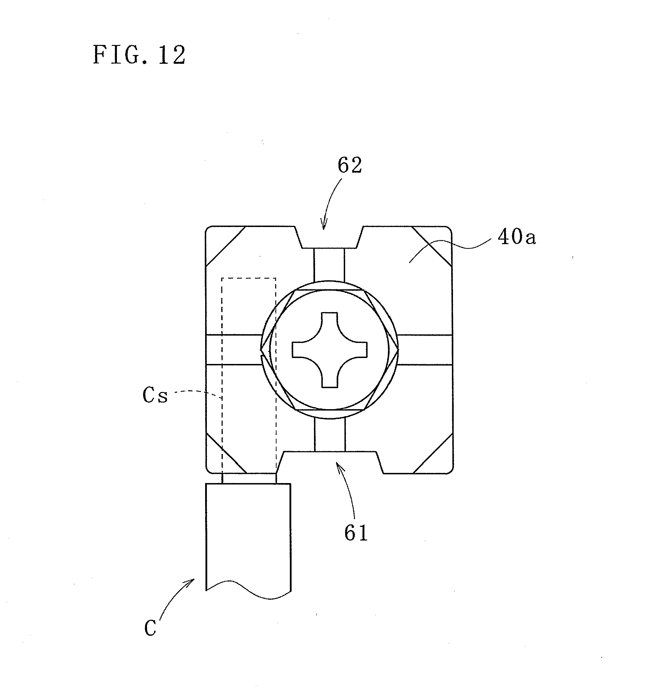

According to this embodiment, the first cut-out portion 61 for avoiding interference with the solderless terminal T or the wire cores Cs crimped by the solderless terminal T allows the solderless terminal T of a smaller size to be connected to the terminal portion 32. Thus, the electrical wire C of a smaller size can be easily fixed to the screw terminal block 12.
Since the width of the first cut-out portion 61 becomes narrower toward the side opposite to the opening, fixation of the solderless terminal T is facilitated even if the square washer 40a is displaced around a central axis of the terminal screw 42 when the terminal screw 42 is fastened.
By fitting the second cut-out portion 62 with the projection provided on the housing 30, the square washer 40a is positioned and the opening direction of the first cut-out portion 61 is defined. Thus, mistakes during assembly can be reduced.
As is clear from comparison between Fig. 10 and Fig. 12, when the wire cores Cs of the electrical wire C is held (put) between the square washer 40a and a terminal fitting 38, since a cut-out portion is not provided at a portion of the square washer 40a that is in contact with the wire cores C, a larger area of contact between the wire cores Cs and the square washer 40a can be secured, in other words, force for holding a cable can be secured. (see Fig. 12).

It should be understood by those skilled in the art that various modifications, combinations, sub-combinations and alterations may occur depending on design requirements and other factors insofar as they are within the scope of the appended claims or the equivalents thereof.

The solderless terminal T is not limited by the embodiments described above. The solderless terminal T can be a solderless terminal of any type, such as a non-insulated solderless terminal and a solderless terminal with insulating sheath.
The connecting portion of the solderless terminal T is not limited to a ring shape, but can be a spade tongue shape (i.e., Y-shape), for example.
The electrical device is not limited to an inverter. Other examples of the electrical device include a controller and a measurement device.

## Claims

1. A screw terminal block (12) **characterized by**:
a terminal fitting (38) connected with a solderless terminal (T) having a crimping portion (22) crimped to wire cores (Cs) of an electrical wire (C);
a plate-shaped square washer (40) having a cut-out portion (60), the cut-out portion (60) provided in at least one edge of the square washer (40), the cut-out portion (60) for avoiding interference with one of the crimping portion (22) of the solderless terminal (T) and the wire cores (Cs) projecting from the crimping portion (22) to an end of the electrical wire (C); and
a terminal screw (42) fixing the solderless terminal (T) between the square washer (40) and the terminal fitting (38).

2. The screw terminal block according to claim 1, **characterized in that**
a width of an opening of the cut-out portion (60) is greater than a depth of the cut-out portion (60), and the depth is directed toward an edge opposite to the edge including the cut-out portion (60).

3. An electric motor controller, **characterized by** a screw terminal block (12) according to claim 1 or 2.

4. The electric motor controller according to claim 3, **characterized in that**
a width of the cut-out portion (60) becomes narrower toward a side opposite to the opening.

5. The electric motor controller according to claim 3, **characterized in that**
the cut-out portion (60) has a trapezoidal shape in planar view.

6. The electric motor controller according to any one of claims 3 to 5, **characterized in that**
the electric motor controller is dual rated.

7. An electrical device, **characterized by** a screw terminal block (12) according to claim 1 or 2.
